# EUROPEAN PATENT SPECIFICATION

(11) **EP 0 564 825 B1**
(45) Date of publication and mention of the grant of the patent: **23.11.2005**
(21) Application number: 93103555.4
(22) Date of filing: 05.03.1993
(51) Int. Cl.: H04L 9/00, H04L 9/32

(54) **Method for identification of secret data messages in a uni-directional multipoint network using cyclic redundancy checks**
Verfahren zur Identifizierung von geheimen Datennachrichten in einem unidirektionalen Vielpunktnetzwerk mit Anwendung von zyklischen Redundanzprüfungen
Procédé d'identification d'informations secrètes dans un réseau multipoint unidirectionnel utilisant des codes à contrôle de redondance cyclique

(30) Priority: 11.03.1992 FI 921055
(43) Date of publication of application: 13.10.1993
(73) Proprietor: NOKIA TECHNOLOGY GmbH, 44807 Bochum (DE)
(72) Inventor: Kangas, Mauri, SF-21530 Paimio (FI)
(74) Representative: Nordin, Leif Göran

(56) References cited:
- US-A- 4 771 458
- IEEE TRANSACTIONS ON COMMUNICATION TECHNOLOGY, vol.COM-17, no.1, February 1969, NEW YORK US pages 42 - 48 D.MANDELBAUM 'AN APPLICATION OF CYCLIC CODING TO MESSAGE IDENTIFICATION'

## Description

This invention relates to a method for identifying secret data messages in a transmitting system where a cyclic redundancy code (CRC) is used for error check.

With the help of the method according to the invention it can be identified to whom or to which group a message is potentially transmitted without increasing the amount of bits in the information transmitted and without opening all the secret data messages.

In a unidirectional multipoint network unique messages are to be sent to several different receiving persons as a steady flow. The messages have been coded with a complicated algorithm which also involves error check. The length of the messages is to be kept as low as possible and the personalities of the receiving persons secret.

Since the messages cannot include the identification of the receiving person in a clear form, this must be included in the secret message. Because the receiving person has to distinguish which ones of the messages are for him/her, all the receiving persons have to read all the messages. This takes too much time. It must be noted here that the messages can be personally coded so that the contents of a message meant for another receiving person cannot be solved. With the help of a personal identification a receiving person can, after opening the message, determine wheather the message was meant for him/her or not.

The aim of the invention is to accomplish a transmitting system for secret data messages, where all the receiving persons do not have to read all the messages and where the above mentioned problems can be solved.

A similar task is described in US 4,944,006, a divisional application of US S/N 025,236, now US patent No. 4,771,458. It is described in both US patent documents that the functions of message or data encryption, error protection of transmitted data and address recognition are uniquely intertwined to facilitate processing efficiency. In both documents a cyclic redundant code arrangement (CRC) is utilized for simultaneous data encryption, error protection and address recognition. This reduces processing time of the data packets since a non-zero remainder in the CRC code, for any reason, results in the packet not being processed.

It is not always desirable, however, to combine the functions as described in these documents. It is therefore an object of the present invention to accomplish a method for identifying to whom a message is potentially transmitted without increasing the amount of bits in the information transmitted and without opening all the secret data messages and handling message encryption, error protection and address recognition separately from each other.

To achieve said object, the present invention provides a method wherein the transmitted CRC-part of the data message is calculated at the transmitting end from a CRC value of the data message to be transmitted and from a unique personal CRC-identifier, and wherein a pre-identification of the secret data messages at the receiving end is carried out prior to decryption of the secret data messages by reverse calculation of the CRC identifier from the received CRC part and a CRC value, and wherein the final personal address recognition is carried out after decryption of the secret data messages by evaluating said unique personal CRC-identifier.

According to one embodiment of the method a CRC value, together with the CRC-identifier, is calculated as a function that can be calculated reversely in a receiving end of the system, the result value is added to the end of the secret data message and is sent to the receiver as CRC-part.

Since all the messages have error check, such as a 16-bit CRC code, this can be used in identifying the messages without increasing the length of the messages.

An embodiment of the present invention will now be described with reference to the accompanying drawings in which:
Figure 1 is a diagram illustrating transmitting and receiving of a secret message in the present invention.
Figure 2 is a diagram illustrating a coding circuit of a (n-k)-step transfer register according to the present invention.
Figure 3 is a diagram illustrating a decoding circuit of a (n-k)-step transfer register according to the present invention.

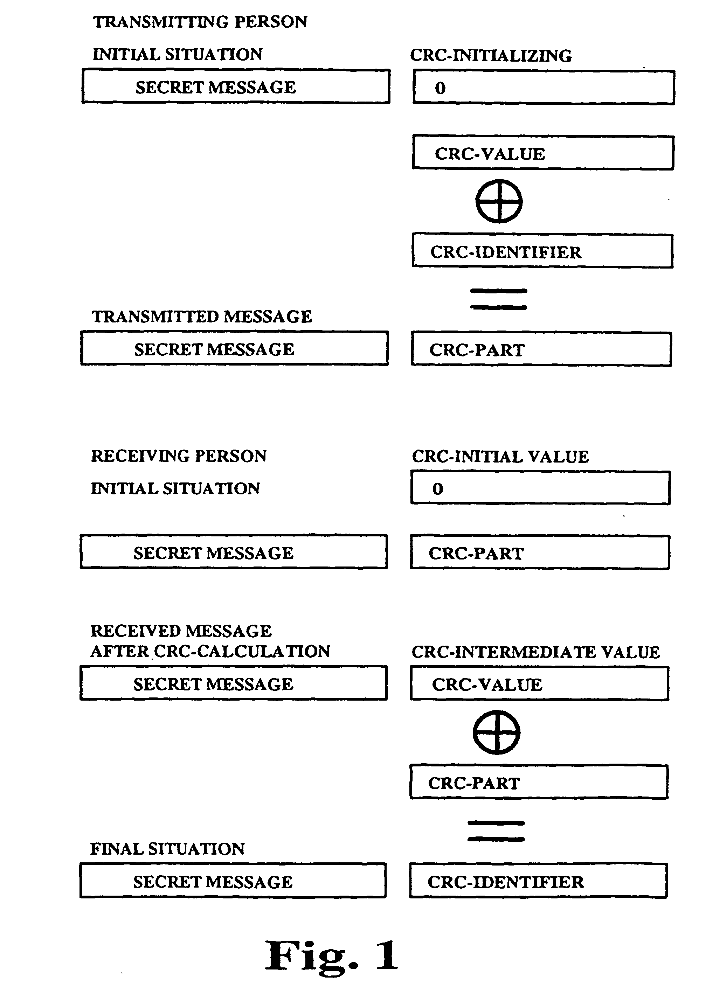

The diagram shown in figure 1 is a diagram of transmitting and receiving of a secret message in the present invention. In addition to the own personal identification each receiving person or group is given a unique CRC-identifier which is used in transmitting end for CRC-calculation.

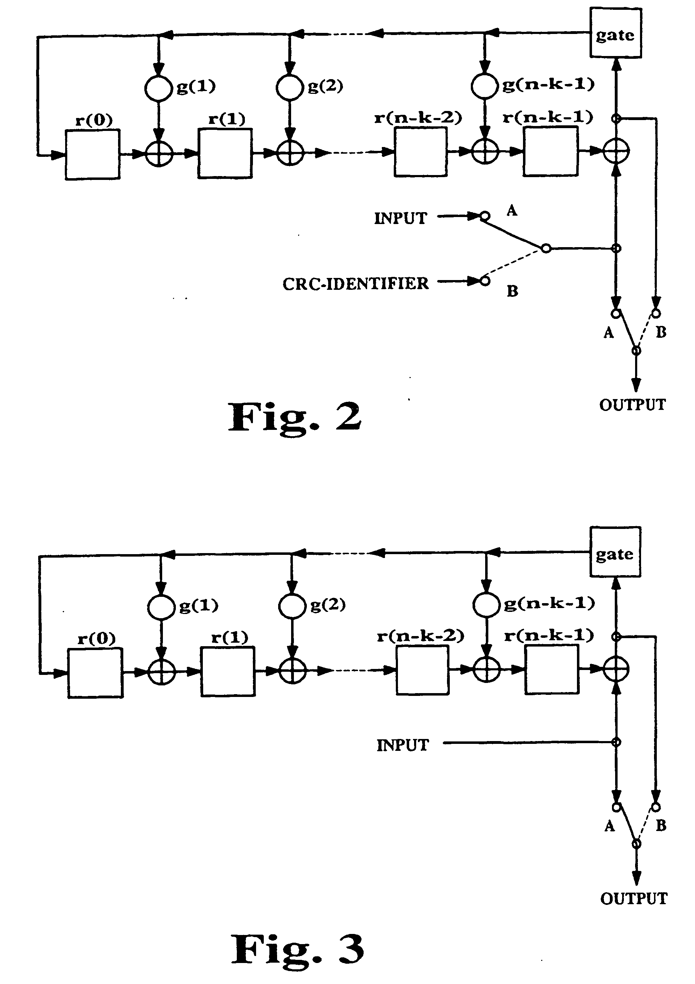

The diagram shown in figure 2 is a diagram of a coding circuit of a (n-k)-step transfer register according to the present invention. For the CRC-calculation of the secret message a back coupled transfer register is used which is initialized to "0" in CRC-calculation. When the CRC-value is calculated for the transmitted message, a 16-bit CRC-value is got with a 16-bit coding circuit. The CRC-value is taken to XOR-function together with the unique CRC-identification. The produced 16-bit CRC-part is added to the end of the message and transmitted to the receiver.

The switch is in position A during the secret message and in position B during the CRC-part. Instead of XOR-function there can be another function used, which can be reversed in the receiving end. Here XOR-function is taken as an example, since it is very easy to realize in hardware CRC-calculation.

The diagram shown in figure 3 is a diagram of a decoding circuit of a (n-k)-step transfer register according to the present invention. The transfer register of the receiver is initialized to "0". When the secret message is now taken to the CRC transfer register of the receiver, the last state of the transfer register will now have the CRC-value of the receiving person, if the appropriate message is meant for the receiving person and error-free. The switch positions correspond to the figure 2.

If there is an error in transmitting, the receiving persons might have misinterpretations as to whom the message is meant. If the amount of errors stays low, the receiving persons do not need to open the messages unnecessarily.

When there is a lot more receiving persons than implied by the CRC-identification (if the CRC-value is 16 bits, the CRC-identification can be for example 16, 7 or 6 bits) several receiving persons need to have the same CRC-identification. Because of this a lot of messages are opened unnecessarily. Because the messages always contain the identification of the receiving person, the receiving persons do not get wrong information.

The error check value can be so long that it includes both error check and data message identification, but it does not necessarily need to be. If the error check parts are taken along, the XOR-operation is only carried out with a part of the check part bytes or the check part is totally different. If the XOR-operation is carried out with the whole error check value and the error check is so left out, the method used however includes an error check as after opening a unique message the receiving persons own address must be found inside the opened message.

## Claims

1. A method for identifying secret data messages in a transmitting system where a cyclic redundancy code (CRC) is used for error check, wherein the transmitted CRC part of the data message is calculated at the transmitting end from a CRC value of the data message to be transmitted and from a unique personal CRC-identifier, and wherein a pre-identification of the secret data messages at the receiving end is carried out prior to decryption of the secret data messages by reverse calculation of the CRC identifier from the received CRC part and a CRC value, and wherein the final personal address recognition is carried out after decryption of the secret data messages by evaluating said unique personal CRC-identifier.

2. A method as claimed in claim 1, wherein a CRC value, together with the CRC-identifier, is calculated as a function that can be calculated reversely in a receiving end of the system, the result value is added to the end of the secret data message and is sent to the receiver as CRC part.

3. A method as claimed in claim 2, wherein a CRC value, together with the received CRC part, is calculated as a function that can be calculated reversely at the receiving end, which gives the CRC-identifier of the receiving group of persons in question as a result, when the message is meant for the receiving group in question.

4. A method as claimed in claims 2 or 3, wherein said function is an exclusive-OR function.

## Patentansprüche

1. Verfahren zum Identifizieren geheimer Datennachrichten in einem Übertragungssystem, in dem ein zyklischer Redundanz-Code (CRC) für die Fehlerprüfung verwendet wird, wobei der übertragene CRC-Teil der Datennachricht an dem sendenden Ende aus einem CRC-Wert der zu sendenden Datennachricht und aus einem eindeutigen persönlichen CRC-Identifikator berechnet wird, und wobei eine Voridentifizierung der geheimen Datennacbrichten an dem empfangenden Ende vor der Entschlüsselung der geheimen Datennachrichten durch Zurückrechnen des CRC-Identifikators aus dem empfangenen CRC-Teil und einem CRC-Wert ausgeführt wird, und wobei die endgültige persönliche Adresserkennung nach der Entschlüsselung der geheimen Datennachrichten durch Auswerten des eindeutigen persönlichen CRC-Identifikators ausgeführt wird.

2. Verfahren nach Anspruch 1, wobei ein CRC-Wert, zusammen mit dem CRC-Identifikator, als eine Funktion berechnet wird, die an einem empfangenden Ende des Systems zurückgerechnet werden kann, der Ergebniswert dem Ende der geheimen Datennachricht hinzugefügt wird und als CRC-Teil an den Empfänger gesendet wird.

3. Verfahren nach Anspruch 2, wobei ein CRC-Wert, zusammen mit dem empfangenen CRC-Teil, als eine Funktion berechnet wird, die an dem empfangenden Ende zurückgerechnet werden kann, was als Ergebnis den CRC-Identifikator der betreffenden empfangenden Gruppe von Personen ergibt, wenn die Nachricht für die betreffende empfangende Gruppe gedacht ist.

4. Verfahren nach Anspruch 2 oder 3, wobei die Funktion eine Exklusiv-ODER-Funktion ist.

## Revendications

1. Procédé permettant d'identifier des messages de données secrets dans un système de transmission dans lequel un code de redondance cyclique (CRC) est utilisé pour le contrôle d'erreurs, dans lequel la partie de CRC émise du message de données est calculée au niveau de l'extrémité de transmission à partir d'une valeur CRC du message de données à transmettre, et à partir d'un identificateur CRC personnel unique, et dans lequel une pré identification des messages de données secrets au niveau de l'extrémité de réception est exécutée avant le déchiffrement des messages de données secrets au moyen de calculs inversés de l'identificateur CRC à partir de la partie de CRC reçue et d'une valeur CRC, et dans lequel la reconnaissance d'une adresse personnelle finale est exécutée après le déchiffrement des messages de données secrets en évaluant ledit identificateur CRC personnel unique.

2. Procédé selon la revendication 1, dans lequel une valeur CRC, associée à l'identificateur CRC, est calculée en tant qu'une fonction qui peut être calculée de façon inversée dans une extrémité de réception du système, la valeur ainsi obtenue étant ajoutée à la fin des messages de données secrets et envoyée vers le destinataire en tant qu'une partie du CRC.

3. Procédé selon la revendication 2, dans lequel une valeur CRC, associée à la partie de CRC reçue, est calculée en tant qu'une fonction qui peut être calculée de façon inversée au niveau de l'extrémité de réception, ce qui donne en résultat l'identificateur CRC du groupe de personnes destinataires en question, lorsque le message est destiné au groupe destinataire en question.

4. Procédé selon les revendications 2 ou 3, dans lequel ladite fonction est une fonction OU exclusif.
